# EUROPÄISCHE PATENTANMELDUNG

(11) **EP 2 815 917 A1**
(43) Veröffentlichungstag der Anmeldung: **24.12.2014**
(21) Anmeldenummer: 14466010.7
(22) Anmeldetag: 04.06.2014
(51) Int. Cl.: B60N 2/60, B60R 11/00, B60R 7/04

(54) **Sitzabdeckung eines Fahrzeugsitzes**

(30) Priorität: 07.06.2013 CZ 20130432
(71) Anmelder: Skoda Auto a.s., 293 60 Mladá Boleslav (CZ)
(72) Erfinder: Kraus, Ladislav, CZ-512 36 Horní Branná (CZ); Zetková, Dana, CZ-518 01 Dobru?ka (CZ)

(57) **Zusammenfassung**

Sitzabdeckung (1) des Fahrzeugsitzes bestehend aus einem festen Netzgewebe (5) und einem am Netzumfang ausgebildeten Rand (10). Die Darstellung der Erfindung liegt darin, dass der Rand (10) im unteren Abschnitt der Sitzabdeckung (1) durch ein festes Gurtband (7), im oberen Abschnitt der Sitzabdeckung (1) durch einen elastischen Besatz (6) und an beiden Seiten der Sitzabdeckung (1) durch ein elastisches Gurtband (4) gebildet wird. Das elastische Gurtband (4) an einer Seite der Sitzabdeckung (1) weist an seinem Ende ein mit Haken (3) abgeschlossenes elastisches Band (8) und das elastische Gurtband (4) an der anderen Seite der Sitzabdeckung (1) an seinem Ende eine elastische Schlaufe (2) auf.

## Beschreibung

### Technisches Gebiet

Die Erfindung betrifft eine aus Netzgewebe bestehende Sitzabdeckung, die oberhalb des Sitzes überspannt und zum Fahrzeugsitz befestigt werden kann.

### Bisheriger Stand der Technik

Aus dem DE102004045381 A1 ist eine Sitzabdeckung bestehend aus einem ausziehbaren Rollo bekannt, das im ausgezogenen Zustand oberhalb einer Sitzfläche eines Sitzes des Kraftfahrzeuges angebracht ist. Das permanente Anspannen wird durch die im Rollo untergebrachte Feder sichergestellt. Im ausgezogenen Zustand überspannt diese Sitzabdeckung die auf der Sitzfläche des Fahrzeugsitzes abgelegten Gegenstände und sichert so die Gegenstände gegen ein Herunterrutschen von der Sitzfläche während der Fahrt.

Der Nachteil dieser Lösung liegt darin, dass die Verwendung des Rollos für die Überspannung der Sitzfläche diese Lösung unnötig verteuert.

### Darstellung der Erfindung

Die Aufgabe wird durch die Sitzabdeckung des Fahrzeugsitzes gelöst, die aus einem Netzgewebe und einem am Netzumfang gebildeten Rand besteht, der durch seine Elastizität den benötigten Effekt ohne Notwendigkeit eines zusätzlichen Vorspannens durch eventuelles Rollo gewährt.

Der Rand der Sitzabdeckung ist im unteren Abschnitt der Abdeckung durch ein festes Gurtband und im oberen Abschnitt der Sitzabdeckung durch einen elastischen Besatz gebildet, wobei an beiden Seiten der Abdeckung den Rand ein elastisches Gurtband bildet. Am Ende des elastischen Gurtbandes ist an der einen Seite der Sitzabdeckung ein elastisches Band mit befestigtem Haken und an der anderen Seite der Sitzabdeckung eine elastische Schlaufe ausgebildet. Das elastische Gurtband umfasst ein durchgehendes elastisches Gummiband.

Der elastische Besatz ist so ausgebildet, damit durch seine Anhebung die benötigten Gegenstände unter das feste Netzgewebe der Abdeckung eingelegt werden können. Während der Fahrt sichert der elastische Besatz zusammen mit den seitlichen elastischen Gurtbändern und dem festen Gurtband diese Gegenstände gegen das Bewegen und Herunterrutschen von der Sitzfläche.

### Übersicht der Figuren der Zeichnungen

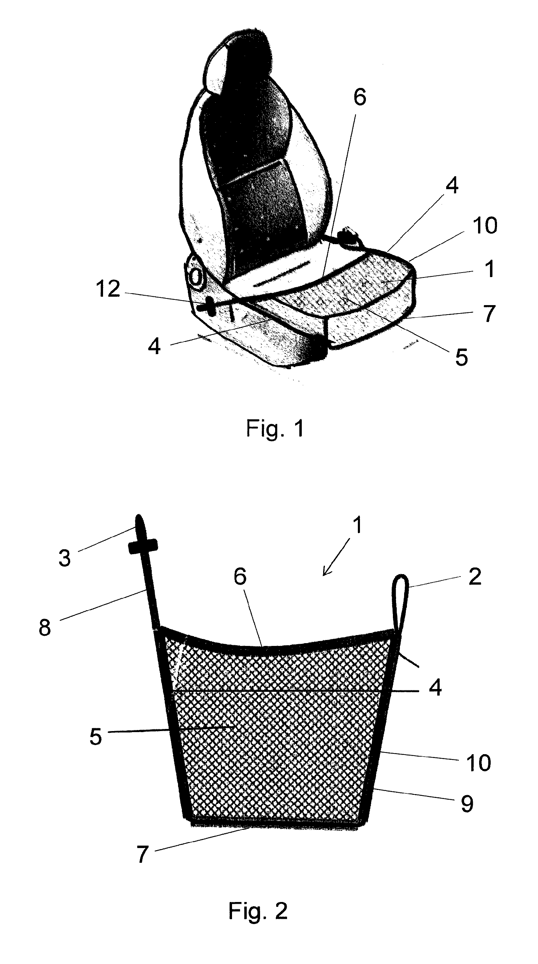

Die Fig. 1 zeigt eine Gesamtansicht des Fahrzeugsitzes mit der überspannten Abdeckung der Sitzfläche, die Fig. 2 zeigt die Sitzabdeckung selbst.

### Ausführungsbeispiel der Erfindung

Die Fig. 1 zeigt die Sitzabdeckung 1 des Fahrzeugsitzes, die durch ein festes Netzgewebe 5 mit kleinen Maschen und einem am Netzumfang ausgebildeten Rand 10 gebildet wird. In dem unteren Abschnitt der Sitzabdeckung 1, gemäß Fig. 1 und 2, ist der Rand 10 durch ein festes Gurtband 7 gebildet. Im oberen Abschnitt der Sitzabdeckung 1 ist der Rand 10 durch den eingestrickten elastischen Besatz 6 gebildet. An beiden Seiten der Sitzabdeckung 1 wird der Rand 10 durch ein elastisches Gurtband 4 gebildet. An einer Seite der Sitzabdeckung 1 weist das elastische Gurtband 4 an seinem Ende ein elastisches Band 8 auf, das mit einem Metallhaken 3 abgeschlossen ist, und an der anderen Seite der Sitzabdeckung 1 weist das elastische Gurtband 4 an seinem Ende eine elastische Schlaufe 2 auf. Die elastische Schlaufe 2 ist aus einem elastischen Gummiband ausgebildet. Das elastische Gurtband 4 umfasst ein durchgehendes elastisches Gummiband 9. Das Gummiband 9 an einem der elastischen Gurtbänder 4 mündet am Ende in einer elastischen Schlaufe 2.

Der eigentliche Einbau der Sitzabdeckung 1 auf das Sitzkissen erfolgt so, dass mit dem festen Gurtband 7 auf den unteren Abschnitt des Sitzes aufgezogen und über das Sitzkissen überzogen wird. An einer Seite wird der Haken 3 an den Kunststoffrahmen des Sitzes eingehakt und an der anderen Seite die elastische Schlaufe 2 über die Abdeckung des Sicherheitsgurtschlosses überzogen.

### Gewerbliche Anwendbarkeit

Die erfindungsgemäße Sitzabdeckung des Fahrzeugsitzes kann in allen Fahrzeugen genutzt werden, wenn Gegenstände an einem Sitz gesichert werden sollen.

### Verwendete Bezeichnungen

- 1: Sitzabdeckung eines Fahrzeugsitzes
- 2: elastische Schlaufe
- 3: Haken
- 4: elastisches Gurtband
- 5: festes Netzgewebe der Sitzabdeckung
- 6: elastischer Besatz
- 7: festes Gurtband
- 8: elastisches Band
- 9: elastisches Gummiband
- 10: Rand der Sitzabdeckung

## Patentansprüche

1. Sitzabdeckung (1) des Fahrzeugsitzes bestehend aus einem festen Netzgewebe (5) und einem am Netzumfang ausgebildeten Rand (10) **dadurch gekennzeichnet, dass** der Rand (10) im unteren Abschnitt der Sitzabdeckung (1) durch ein festes Gurtband (7), im oberen Abschnitt der Sitzabdeckung (1) durch einen elastischen Besatz (6) und an beiden Seiten der Sitzabdeckung (1) durch ein elastisches Gurtband (4) gebildet wird, wobei das elastische Gurtband (4) an einer Seite der Sitzabdeckung (1) an seinem Ende ein mit Haken (3) abgeschlossenes elastisches Band (8) und das elastische Gurtband (4) an der anderen Seite der Sitzabdeckung (1) an seinem Ende eine elastische Schlaufe (2) aufweist.

2. Sitzabdeckung (1) nach Anspruch 1 **dadurch gekennzeichnet, dass** das elastische Gurtband (4) ein durchgehendes elastisches Gummiband (9) umfasst.
